# EUROPEAN PATENT APPLICATION

(11) **EP 2 693 303 A1**
(43) Date of publication of application: **05.02.2014**
(21) Application number: 12178642.0
(22) Date of filing: 31.07.2012
(51) Int. Cl.: G06F 3/033

(54) **Apparatus and method pertaining to a stylus that emits a plurality of infrared beams**

(71) Applicant: BlackBerry Limited, Waterloo, ON N2K 0A7 (CA)
(72) Inventor: Mercea, Cornel, Waterloo, Ontaria N2L 3W8 (CA); Gao, Yu, Waterloo, Ontario N2L 3W8 (CA); Singh, Amit Pal, Waterloo, Ontario N2L 3W8 (CA); Lee, Hsin-Chin, Waterloo, Ontario N2L 3W8 (CA)
(74) Representative: Hibbert, Juliet Jane Grace

(57) **Abstract**

A stylus has a writing tip and includes a plurality of infrared transmitters configured and disposed to emit a plurality of infrared beams via that writing tip. These infrared transmitters can be disposed substantially equidistant from one another about a central axis of the writing tip and emit infrared beams at an angle that is other than parallel to that central axis. A corresponding display can detect these various beams to determine corresponding stylus-gesture information. This stylus-gesture information can comprise, for example, determining an angle of inclination of the stylus. As another example this stylus-gesture information can comprise rotation (such as a direction of rotation or the mere state of rotation) about the stylus' longitudinal axis. This stylus-gesture information, in turn, can serve as parameters to further guide or influence any of a variety of applications.

## Description

### Field of Technology

The present disclosure relates to active styli and to displays configured to receive input via an active stylus.

### Background

Many electronic devices, including portable electronic devices such as but not limited to so-called smartphones and tablet/pad-styled devices, are configured to receive user input, at least in part, via a display. A touch-sensitive display, for example, provides a way for a user to tap or swipe the display surface with a finger in order to express selections, input information, and so forth.

Many devices are configured to work specifically with a hand-held stylus in these same regards (either in lieu of the foregoing or in combination therewith). Some displays, for example, include a plurality of light-emitting transmitter/receiver pairs disposed along the sides of the display. By determining where a stylus breaks one of the corresponding light beams the device can determine a present location of the stylus and utilize that location information accordingly. In some instances the stylus comprises an active stylus. In such a case the stylus includes one or more electrically-powered components that serve to interact with the display in a way that facilitates the display determining, for example, a point of contact between the stylus and the display.

While suitable for at least some purposes, known approaches do not necessarily support all desired modes of input expression that stylus manipulation might seem to offer. The applicants have determined, for example, that few if any prior art approaches well support a variety of uniquely stylus-based gestures such as tilting the stylus or rotating the stylus about its central axis.

### Brief Description of the Drawings

FIG. 1 is a side-elevational schematic view in accordance with the disclosure.

FIG. 2 is a top-plan schematic view in accordance with the disclosure.

FIG. 3 is a block diagram in accordance with the disclosure.

FIG. 4 is a flow diagram in accordance with the disclosure.

FIG. 5 is a perspective schematic view in accordance with the disclosure.

FIG. 6 is a top-plan schematic view in accordance with the disclosure.

FIG. 7 is a top-plan schematic view in accordance with the disclosure.

FIG. 8 is a top-plan schematic view in accordance with the disclosure.

FIG. 9 is a top-plan schematic view in accordance with the disclosure.

FIG. 10 is a top-plan schematic view in accordance with the disclosure.

### Detailed Description

The following describes an apparatus and method pertaining to a stylus having a writing tip and wherein the stylus includes a plurality of infrared transmitters configured and disposed to emit a plurality of infrared beams via the writing tip. By one approach these infrared transmitters are disposed substantially equidistant from one another about a central axis of the writing tip and emit infrared beams at an angle that is other than parallel to that central axis. By one approach each of these infrared beams includes a corresponding unique identifier to facilitate differentiating one from the other.

By one approach a corresponding electronic display can include a plurality of infrared receivers disposed along at least two sides of the electronic display. A control circuit can operably couple to these infrared receivers and process received information regarding the aforementioned plurality of infrared beams to thereby determine (in addition to such location information as may be of interest) stylus-gesture information. This stylus-gesture information can comprise, for example, determining an angle of inclination of the stylus. As another example this stylus-gesture information can comprise rotation (such as a direction of rotation or the mere state of rotation) about the stylus' longitudinal axis.

By one approach the aforementioned control circuit employs the stylus-gesture information to determine a parameter that the control circuit then uses to modify some application setting such as a drawing parameter (including but not limited to a rendered stylus shadow or line thickness) or a rendering parameter (including but not limited to a zoom-in and/or zoom-out parameter).

So configured, such a stylus can readily serve in an ordinary manner to permit a user, for example, to select displayed items or to scribe an electronic ink line on the display. This stylus can leverage the physical attributes to its own handling, however, to also provide a deeper and richer user experience. Tilt sensitivity, for example, can permit the stylus to be employed in a variety of ways including as a joystick controller. Rotation sensitivity can be similarly leveraged in a variety of ways to provide a simple and intuitive user-input mechanism.

For simplicity and clarity of illustration, reference numerals may be repeated among the figures to indicate corresponding or analogous elements. Numerous details are set forth to provide an understanding of the embodiments described herein. The embodiments may be practiced without these details. In other instances, well-known methods, procedures, and components have not been described in detail to avoid obscuring the embodiments described. The description is not to be considered as limited to the scope of the embodiments described herein.

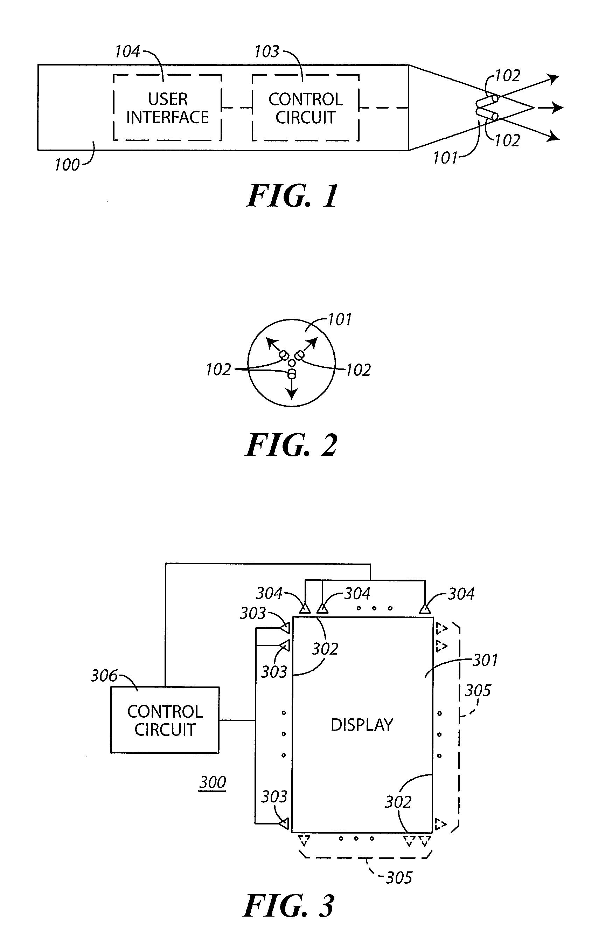

FIGS. 1 and 2 present a schematic depiction of a stylus 100. Generally speaking, a stylus is typically a hand-held writing utensil that often (but not exclusively) has a pencil-like elongated form factor and that includes at least one pointed end configured to interact with a drawing/writing surface. Using a stylus as an input mechanism with a display offers a variety of advantages over a fingertip including the opportunity for increased precision as well as an expression modality that accords with the user's own past experience with a pencil or pen.

In this illustrative example the stylus 100 includes a writing tip 101 that itself includes a plurality of infrared transmitters 102 such as a plurality of infrared light-emitting diodes as are known in the art. By one approach these infrared transmitters emit infrared light at a frequency that is distinct from solar-radiated light. Such an approach can help to ensure infrared light beam detection per these teachings even when using the stylus 100 in direct or indirect sunlight.

These teachings will accommodate essentially any plural number of such infrared transmitters 102, from two onwards. Generally speaking, three infrared transmitters 102 will serve well for a variety of application settings and hence will serve as a useful example for the sake of this description. It will be understood, however, that using three such infrared transmitters 102 is intended only as an illustrative example and is not to be taken as any suggestion of a limitation or requirement in these regards.

In this particular illustrative example the infrared transmitters 102 are disposed substantially equidistant from one another (i.e., from adjacent infrared transmitters 102) about a central axis of the writing tip 101. Other spacings, both regular and irregular, could be employed as desired. For many application settings, however, an axially-based equidistant arrangement can simply processing requirements for the display apparatus as described below.

Also in this particular illustrative example the infrared transmitters 102 are disposed non-parallel to that central axis such that none of the corresponding infrared beams exit the stylus 100 at an angle that is not parallel to the writing tip's central axis. In this example the infrared transmitters 102 are all offset by a substantially identical amount such as, for example, 1 degree, 2 degrees, 5 degrees, 10 degrees or some other angle of choice. As with the aforementioned spacing, these infrared transmitters 102 can have dissimilar angles if desired but for many application settings the use of a common angle can simplify processing requirements for the display.

By one approach, each of the infrared beams emitted by the stylus 100 includes a corresponding unique identifier. These teachings will accommodate a variety of approaches in these regards. For example, each such infrared transmitter 102 can emit an infrared beam at a different frequency. As another example, each infrared transmitter 102 can pulse its infrared beam using a pulsing pattern that is unique to itself. And as yet another example, the infrared beams can be modulated in any of a variety of other ways to provide that unique identifier. (These teachings will also accommodate, if desired, modulating one or more of these infrared beams to convey other information or data of choice.) By one approach a first light-emitting diode could send one pulse, the second one 2 pulses, and the third one 3 pulses to facilitate differentiating one source from another.

As a more specific illustrative example in these regards (and again without intending any particular limitations), as an initial stage all three light-emitting diodes of such a stylus 100 transmit X pulses simultaneously (where X comprises an integer between 3 and 8). This approach allows the receiving system to calculate a highly accurate position of the stylus 100 using triangulation techniques and to otherwise synchronize with the stylus 100. In particular, based on the pattern received, the receiving system can identify the frequency and the duty cycle and these various transmissions and use that information as a reference when decoding subsequent transfers.

These teachings will accommodate optionally using an encrypted code for stylus identification. Such an approach could still allow the receiving system to localize the stylus 100, but all the subsequently-transmitted information (pertaining, for example, to sensed pressure, a button press, battery level, and so forth) would be ignored if the stylus 100 does not pass the decryption test. In any event, the stylus 100 can transmit information regarding regarding such things as the force currently being applied to the stylus' tip using, for example, 8 to 10 bits in a corresponding field. Such information could be transmitted as often, or as infrequently, as desired.

By one approach the stylus 100 can further include a control circuit 103 that operably couples to the aforementioned infrared transmitters 102. Such a control circuit 103 can comprise a fixed-purpose hard-wired platform or can comprise a partially or wholly programmable platform. These architectural options are well known and understood in the art and require no further description here. This control circuit 103 is configured (for example, by using corresponding programming as will be well understood by those skilled in the art) to cause the infrared transmitters 102 to emit their corresponding infrared beams as described herein. If desired, the stylus 100 can further include a user interface 104 (such as a button or switch) that operably couples to such a control circuit 103 and/or the infrared transmitters 102 to selectively toggle the infrared transmitters 102 between transmitting and non-transmitting states.

It will again be understood that the foregoing description is intended to serve an illustrative rather than a limiting purpose. In fact, the present teachings are highly flexible in practice and will accommodate a wide range of alternative configurations. As but one simple example in these regards, a fourth infrared transmitter (not shown) could be coaxially-disposed with the central axis of the writing tip 101 in order to emit an infrared beam that is coaxial with that central axis. Such a centrally-disposed beam could be used at the same time as the plurality of beams described above or could be used, on a selective basis, in lieu of the plurality of off-axis beams.

FIG. 3 presents an illustrative example of an apparatus 300 that may comprise an electronic device such as but not limited to a portable electronic device such as a so-called smartphone, tablet-styled computer, and so forth and that includes at least one display 301. This display 301 can be configured to work only in conjunction with a corresponding stylus as described above if desired, but these teachings can also be applied with a display 301 that is also configured to detect a user's fingertip or object other than a stylus. There are various mechanisms and approaches in such regards that comprise a very well understood area of prior art endeavor. Accordingly no further elaboration will be offered here in these regards for the sake of brevity.

This display 301 comprises, at least in part, a light-transmissive substantially planar member. This light-transmissive substantially planar member can be comprised of any of a variety of materials as desired such as, but not limited to, glass and any of a variety of plastics. Generally speaking, this material should be highly transparent for most application settings rather than merely translucent.

This light-transmissive substantially planar member has side edges 302 that form at least a portion of the light-transmissive planar member's periphery. In this case the light-transmissive planar member has a rectangular shape and accordingly has four side edges 302. So configured, adjacent side edges 302 are disposed substantially perpendicular to one another. Though a useful form factor it will be understood that other shapes for the light-transmissive substantially planar member may be useful to accommodate the specific needs of a given application setting.

This apparatus 300 also includes a plurality of light sensors that are disposed along at least two of the side edges 302 of the light-transmissive substantially planar member. By way of example and without intending any particular limitations in these regards, in the illustrated example a first plurality of light sensors 303 are disposed along a first side edge of the light-transmissive substantially planar member and a second plurality of light sensors 304 are disposed along an adjacent side edge of the light-transmissive substantially planar member. If desired, however, other light sensors can be disposed along either or both of the remaining side edges 302 as generally denoted by reference numeral 305.

The number of light sensors disposed along any particular side edge 302 of the light-transmissive substantially planar member can vary with such things as the size of the side edge 302, the desired stylus-location resolution, and so forth. Generally speaking, any given side edge 302 will have at least ten such light sensors and likely considerably more.

By one approach these light sensors comprise light-sensitive active components such as but not limited to photosensitive transistors as are known in the art. Such components are small and can be densely aligned into a corresponding array as will be well understood by those skilled in the art. In this illustrative example these light sensors comprise infrared light sensors (either in addition to being visible-light sensors or to the exclusion of visible light). By one approach, the selected infrared light sensors are sensitive only to infrared light at a frequency that is distinct from solar-radiated light. Such an approach can help to ensure viable stylus detection per these teachings even when using the apparatus 300 in direct or indirect sunlight.

The foregoing light sensors are operably coupled to a control circuit 306. Such a control circuit 306 can comprise a fixed-purpose hard-wired platform or can comprise a partially or wholly programmable platform. These architectural options are well known and understood in the art and require no further description here.

By one approach this control circuit 306 can include (or can otherwise be coupled to) a memory. This memory can serve, for example, to non-transitorily store the computer instructions that, when executed by the control circuit 306, cause the control circuit 306 to behave as described herein. (As used herein, this reference to "non-transitorily" will be understood to refer to a non-ephemeral state for the stored contents (and hence excludes when the stored contents merely constitute signals or waves) rather than volatility of the storage media itself and hence includes both non-volatile memory (such as read-only memory (ROM) as well as volatile memory (such as an erasable programmable read-only memory (EPROM).)

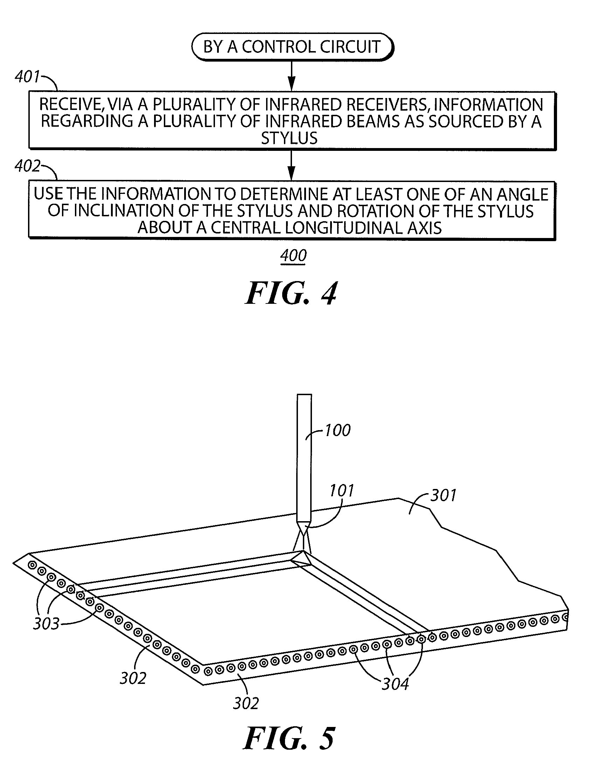

This control circuit 306 is configured (for example, by using corresponding programming as will be well understood by those skilled in the art) to carry out one or more of the steps, actions, and/or functions described herein. For example, this control circuit 306 can be configured to facilitate the process 400 shown in FIG. 4.

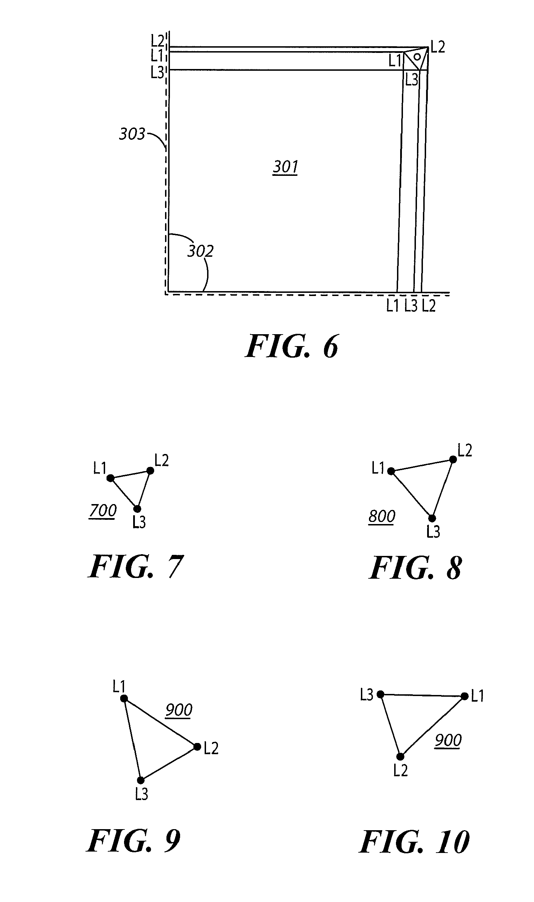

This process 400 provides for receiving 401, via the plurality of light sensors 303 and 304, information regarding the plurality of infrared beams as sourced by the aforementioned stylus 100. FIGS. 5 and 6 provide an illustrative example in these regards. The three infrared light beams transmitted by the stylus 100 each contact the display 301 at a different point forming the vertices of a corresponding triangle (which we depict in these figures for the sake of clarity but of course is not literally present in a real-world example).

For the purposes of clarity (and referring specifically to FIG. 6), the beam from a first one of the infrared transmitters is denoted as L1, the beam from a second one of the infrared transmitters is denoted as L2, and the beam from the third one of the infrared transmitters is denoted as L3. These light beams each move through the display's light-transmissive planar member due to internal reflections and eventually reach the side edges 302 of that member. The light sensors disposed along those side edges 302 then, in turn, detect these various light beams for each of the three light transmitters.

By one approach, the effective center of the aforementioned triangle can be determined by the control circuit 306 to thereby determine a point of contact (or point of closest distance) between the display 301 and the stylus 100. Accordingly, a position of the stylus's writing tip 101 and movement of the latter across the display 301 can be readily determined, tracked, and responded to as desired.

The present teachings, however, will support considerably more aggressive leveraging of the available information. For example, the extent to which the stylus 100 is tilted with respect to the display 301 as well as the direction of that tilt can be readily determined. FIG. 7, for example, depicts the equilateral triangle 700 that results when the stylus 100 is perpendicular to the display 301 and without any tilt whatsoever. As the shape of the triangle distorts, the resulting distortion reflects corresponding tilting of the stylus 100 both in terms of the extent and direction of that tilting.

As another example in these regards, FIG. 8 illustrates the equilateral triangle 800 that results when the stylus 100 is again held perpendicular to the display 301 but at some height above the display 301. That the stylus 100 is indeed hovering can be readily determined by the control circuit 306 merely by noting the increased size of the equilateral triangle as compared to the size of the object when the stylus 100 is in contact with the display 301 as shown in FIG. 7.

FIG. 9 depicts a non-equilateral triangle 900 that corresponds to a particular angle and direction of tilt for the stylus 100. As noted earlier, the geometry of this configuration provides a simple basis upon which the control circuit 306 can calculate the degree of tilt and the angle of tilting.

FIG. 10 depicts the same non-equilateral triangle 900 as FIG. 9, only now rotated clockwise. The control circuit 306 can easily interpret this shift in geometry to conclude that the stylus 100 has rotated about its central axis in a clockwise direction by a particular amount.

Accordingly, and referring again to FIG. 4, the control circuit 306 can use 402 the aforementioned information to determine at least one of an angle of inclination of the stylus 100 and/or rotation of the stylus 100 about a central longitudinal axis. This information, in turn, can be used by the control circuit 306 in a variety of useful and helpful ways.

As one simple example, rotating the stylus 100 clockwise while hovering above a given image can cause the image to enlarge by some amount proportional to the amount of rotation while rotating the stylus 100 counter-clockwise can impose the contrary effect.

As another simple example, placing the stylus 100 down in a certain portion of a game display can cause the stylus's tilting to be interpreted as the movements of a so-called stick control surface for an airplane. Or, more simply, the thickness of a scribed electronic line can be varied as a function of the amount of tilt that the user imparts to the stylus 100, thus providing a considerable opportunity for artistic expression.

And as yet another simple example in these regards, information regarding stylus tilt can help to minimize parallax errors that can occur due to the inevitable gap (typically between 1.0 to 1.5 mm in size) between a display's point of contact with a stylus and the displayed image itself. In particular, rendered electronic ink can be displayed along the axis of the stylus 100 rather than exactly where the stylus tip is reported to accommodate at least to some extent such a parallax error.

So configured, the number of possible interactions between a stylus and a corresponding display can be significantly increased beyond today's typical expectations in these regards. Furthermore, these interactions can be considerably more nuanced and subtle than would ordinarily be expected.

The present disclosure may be embodied in other specific forms without departing from its essential characteristics. The described embodiments are to be considered in all respects only as illustrative and not restrictive. The scope of the disclosure is, therefore, indicated by the appended claims rather than by the foregoing description. All changes that come within the meaning and range of equivalency of the claims are to be embraced within their scope.

## Claims

1. An apparatus comprising:
a stylus (100) configured for use with an electronic display (301), the stylus having a writing tip (101) and wherein the stylus includes a plurality of infrared transmitters (102) configured and disposed to emit a plurality of infrared beams via the writing tip.

2. The apparatus of claim 1 wherein the plurality of infrared transmitters comprises three infrared transmitters.

3. The apparatus of claim 1 wherein the plurality of infrared transmitters are disposed substantially equidistant from one another about a central axis of the writing tip.

4. The apparatus of claim 1 wherein at least one of the infrared beams exits the stylus at an angle that is not parallel to a central axis of the writing tip.

5. The apparatus of claim 4 wherein none of the infrared beams exit the stylus at an angle that is parallel to the central axis of the writing tip.

6. The apparatus of claim 1 wherein each of the infrared beams includes a corresponding unique identifier.

7. The apparatus of claim 1 further comprising:
an electronic display having a plurality of infrared receivers (303, 304) disposed along at least two sides (302) of the electronic display and wherein the electronic display includes a control circuit (306) configured to process received information regarding the plurality of infrared beams to thereby determine, at least in part, at least one of an angle of inclination of the stylus and rotation of the stylus about its longitudinal axis.
